# EUROPEAN PATENT APPLICATION

(11) **EP 4 684 696 A1**
(43) Date of publication of application: **28.01.2026**
(21) Application number: 24774217.4
(22) Date of filing: 21.03.2024
(51) Int. Cl.: A47C 27/06

(54) **SPRING UNIT, SPRING ASSEMBLY, AND SPRING CUSHION**

(30) Priority: 23.03.2023 CN 202310290019
(71) Applicant: New-Tec Integration (Xiamen) Co., Ltd., Xiamen, Fujian 361100 (CN)
(72) Inventor: LENG, Luhao, Xiamen, Fujian 361100 (CN)
(74) Representative: Verscht, Thomas Kurt Albert
(86) International application number: PCT/CN2024/083045
(87) International publication number: WO 2024/193653

(57) **Abstract**

A spring unit, a spring module, and a spring cushion. The spring unit (1) comprises: a base (10), wherein the base (10) comprises a first end (10a) and a second end (10b) opposite to the first end (10a) along a length direction of the base, and a plurality of spring modules (11) are provided between the first end (10a) and the second end (10b). The plurality of spring modules (11) are detachably provided on the base (10), and are configured to have an opening at the bottom, so as to be able to be nested on the upper surfaces of spring modules (11) of another spring unit (1). The spring unit (1) can implement quick disassembly and assembly and transportation of the spring cushion, and can reduce the storage space.

## Description

### CROSS-REFERENCE TO RELATED APPLICATIONS

This application claims priority to Chinese patent application submitted to China National Intellectual Property Administration on March 23, 2023 with application number 2023102900193 and a title of the disclosure "An elastic unit, an elastic module group and an elastic mattress", and the content of this Chinese patent application is incorporated herein as a part of this application.

### FIELD OF THE DISCLOSURE

The present disclosure relates to the field of furniture, and in particular relates to an elastic unit, an elastic module group and an elastic mattress.

### BACKGROUND OF THE DISCLOSURE

Furniture, such as spring beds and sofa beds, is an indispensable part of people's lives. Most of the existing beds and sofa beds comprise an elastic mattress. The elastic mattress has a certain degree of elasticity, when people lie on a bed or a sofa bed, the elastic mattress can provide a certain amount of elastic support and has a certain degree of comfort compared to a hard mattress.

Existing elastic mattresses are usually an integrated, non-detachable, and closed one-piece structure formed by a bottom layer, a spring layer, a sponge superimposed layer and a closed side enclosure, that is, the spring layer is disposed on the bottom layer, the sponge superimposed layer is disposed on the spring layer, and the closed side enclosure is connected to the sponge superimposed layer and the bottom layer to form a closed space. However, in actual use, the elastic mattress has complex assemblies and poor stability, is not convenient to carry, and takes up a large space when stored.

### BRIEF SUMMARY OF THE DISCLOSURE

The present disclosure provides an elastic unit, an elastic module group and an elastic mattress to solve the deficiencies of complex assemblies and poor stability of the elastic mattress in the existing techniques.

In order to solve the technical problem, a first technical solution of the present disclosure is as follows:
An elastic unit, the elastic unit comprises:
A base, the base comprises a first end and a second end opposite to the first end in a length direction of the base and a plurality of elastic modules disposed between the first end and the second end;

The plurality of elastic modules are detachably disposed on the base, with bottoms having openings configured to sleeve over upper surfaces of elastic modules of another elastic unit.

In this technical solution, as the elastic modules are detachably disposed on the base, the elastic modules can have a relatively orderly arrangement with the bottoms having the openings at a position where they are disposed, thus enabling the elastic modules to be configured to be sleeved over the elastic modules of another elastic unit, so that the plurality of elastic modules are configured to be respectively sleeved over the elastic modules of the same elastic unit, or to be sleeved over the elastic modules of two elastic units at two ends, so as to achieve rapid assembly of the elastic modules and make a whole sleeved structure have more excellent stability. Furthermore, the elastic units can also be stacked in a sleeved manner after being detached one by one, which can effectively facilitate disassembly and transportation of an elastic mattress and reduce a space occupied by storage.

In a more preferred embodiment, an elastic module comprises a spring and a flexible sleeve, the flexible sleeve comprises a closed end and an open end, the spring passes through the open end of the flexible sleeve to enter its inner side to enable the flexible sleeve to be wrapped around an outer side of the spring, and the open end of the flexible sleeve is configured to be detachably fixed to a bottom end of the spring to enable the spring to have an initial predetermined compression force; and a top of another elastic module is configured to extend into the open end, thereby completing sleeving of two elastic modules.

In a more preferred embodiment, a thickness of the base is 5-20 mm; and a distance between two adjacent elastic modules is 2-10 mm.

In a more preferred embodiment, the spring is a tapered spring.

In a more preferred embodiment, the spring consists of two parts, a top is a spherical structure, and a bottom connected to the top is tapered structure.

A second technical solution of the present disclosure is as follows:
An elastic module group, the elastic module group comprises:
Two installation units, the two installation units are symmetrically arranged and parallel to each other, each of the installation units comprising a positioning base, the positioning base comprises a first end and a second end opposite to the first end in a length direction of the base, and a plurality of positioning components are disposed at intervals between the first end and the second end; and

A plurality of elastic units, a number of the elastic units is less than or equal to a number of the positioning components of an installation unit, which comprises a base, the base comprises a first end and a second end opposite to the first end in a length direction of the base, and a plurality of elastic modules are disposed between the first end and the second end; and

The plurality of elastic modules are detachably disposed on the base, with bottoms having openings configured to sleeve over upper surfaces of the positioning components of the installation units.

In a more preferred embodiment, an elastic module comprises a spring and a flexible sleeve, the flexible sleeve comprises a closed end and an open end, the spring passes through the open end of the flexible sleeve to enter its inner side to enable the flexible sleeve to be wrapped around an outer side of the spring, and the open end of the flexible sleeve is configured to be detachably fixed to a bottom end of the spring to enable the spring to have an initial predetermined compression force; and a positioning component of an installation unit is configured to extend into the open end, allowing the elastic units to sleeve over the installation units.

In a more preferred embodiment, the spring is a tapered spring.

In a more preferred embodiment, the spring consists of two parts, a top is a spherical structure, and a bottom connected to the top is tapered structure.

A third technical solution of the present disclosure is as follows:
An elastic module group, the elastic module group comprises:
Two first elastic units, the two first elastic units are symmetrically arranged and parallel to each other, a first elastic units comprises:
A first base, the first base comprises a first end and a second end opposite to the first end in a length direction of the first base, and a plurality of first elastic modules are disposed between the first end and the second end;

A plurality of second elastic units, a second elastic unit comprises:
A second base, the second base comprises a first end and a second end opposite to the first end in a length direction of the second base, and a plurality of second elastic modules are disposed between the first end and the second end;

The plurality of the second elastic modules are detachably connected to the second base, with bottoms having openings configured to sleeve over upper surfaces of the first elastic modules of the first elastic units; and

A number of the second elastic units is less than or equal to a number of the first elastic modules.

In a more preferred embodiment, a first elastic module comprises a first spring and a first flexible sleeve, the first flexible sleeve comprises a first closed end and a first open end, the first spring passes through the first open end of the first flexible sleeve to enter into its inner side to enable the first flexible sleeve to be wrapped around an outer side of the first spring, and the first open end of the first flexible sleeve is configured to be detachably fixed to a bottom end of the first spring to enable the first spring to have an initial predetermined compression force;

A second elastic module comprises a second spring and a second flexible sleeve, the second flexible sleeve comprises a second closed end and a second open end, the second spring passes through the second open end of the second flexible sleeve to enter into its inner side to enable the second flexible sleeve to be wrapped around an outer side of the second spring, and the second open end of the second flexible sleeve is configured to be detachably fixed to a bottom end of the second spring to enable the second spring to have an initial predetermined compression force; and a top of the first elastic module is configured to extend into the second open end, thereby completing sleeving of the two.

In a more preferred embodiment, elastic modules most adjacent to the first end and the second end of the second base of each of the second elastic units are respectively sleeved over apposite ones of the first elastic modules of the two first elastic units, so as to enable the plurality of second elastic units and the two first elastic units to be stacked by sleeving.

In a more preferred embodiment, the spring is a tapered spring.

A fourth technical solution of the present disclosure is as follows:
An elastic mattress configured for furniture, the elastic mattress comprises one or more of the elastic units.

A fifth technical solution of the present disclosure is as follows:
An elastic mattress configured for furniture, the elastic mattress comprises:
One or more of the elastic module groups,

A bottom mattress, the bottom mattress is disposed below the elastic module groups, and

An outer cover, the outer cover covers an outer surface of the elastic module groups.

Other features and advantages of the present disclosure will be described in the following description and will be apparent in part from the description, or can be learned by implement of the disclosure. The objectives and other advantages of the present disclosure can be realized and obtained by the specified structures in the specification, claims, and accompanying drawings.

### BRIEF DESCRIPTION OF THE DRAWINGS

In order to more clearly illustrate the technical solutions in the embodiments of the present disclosure or in the existing techniques, the accompanying drawings used in the description of the embodiments or the existing techniques will be briefly introduced below, it is obvious that the accompanying drawings described below are some embodiments of the present disclosure, and other accompanying drawings can be obtained by those of ordinary skill in the art based on these drawings without creative efforts; and the positional relationships described in the accompanying drawings in the following description, unless otherwise specified, are all based on the illustrated orientation of the components shown in the drawings.
FIG. 1 illustrates a structural diagrammatic view of an elastic unit in embodiment 1 of the present disclosure;
FIG. 2 illustrates a side view of the elastic unit in embodiment 1 of the present disclosure;
FIG. 2a illustrates an enlarged view of a position A in FIG. 2;
FIG. 3 illustrates a bottom view of the elastic unit in Embodiment 1 of the present disclosure;
FIG. 4 illustrates a side view of an elastic module in Embodiment of the present disclosure;
FIG. 5 illustrates a semi-sectional view of the elastic module in Embodiment of the present disclosure;
FIG. 6 illustrates a semi-sectional view of another elastic module in Embodiment of the present disclosure;
FIG. 7 illustrates a structural diagrammatic view of an elastic module group in Embodiment 2 of the present disclosure;
FIG. 8 illustrates a structural diagrammatic view of the elastic module group in Embodiment 2 of the present disclosure for assembly;
FIG. 9 illustrates a structural diagrammatic view of the elastic module group in Embodiment 2 of the present disclosure after the assembly;
FIG. 10 illustrates a bottom view of the elastic module group in Embodiment 2 of the present disclosure after the assembly;
FIG. 11 illustrates a structural diagrammatic view of an elastic module group in Embodiment 3 of the present disclosure;
FIG. 12 illustrates a structural diagrammatic view of an elastic mattress in Embodiment 5 of the present disclosure for assembly; and
FIG. 13 illustrates a structural diagrammatic view of an elastic mattress in Embodiment 6 of the present disclosure for assembly.

### DETAILED DESCRIPTION OF THE EMBODIMENTS

In order to further clarify the objective, the technical solutions, and the advantages of the embodiments of the present disclosure, the technical solutions in the embodiments of the present disclosure will be clearly and completely described in conjunction with the accompanying drawings in the embodiments of the present disclosure, and it is obvious that the described embodiments are some of the embodiments of the present disclosure, rather than all embodiments; the technical features designed in the different embodiments of the present disclosure described below can be combined as long as they do not conflict with each other; and all other embodiments fall within the protection scope of the present disclosure provided that they are obtained based on the embodiments of the present disclosure by persons of ordinary skill in the art without creative efforts.

In the description of the present disclosure, it should be noted that all terms (including technical terms and scientific terms) used in the present disclosure have meanings the same as meaning commonly understood by those of ordinary skill in the art to which the present disclosure pertains and should not be understood as a limitation of the disclosure; and it should be further understood that the terms used in the present disclosure should have meaning consistent with the meaning of these terms in the context of this specification and in the relevant field and should not be interpreted in an idealized or overly formal sense, unless explicitly specified in the present disclosure.

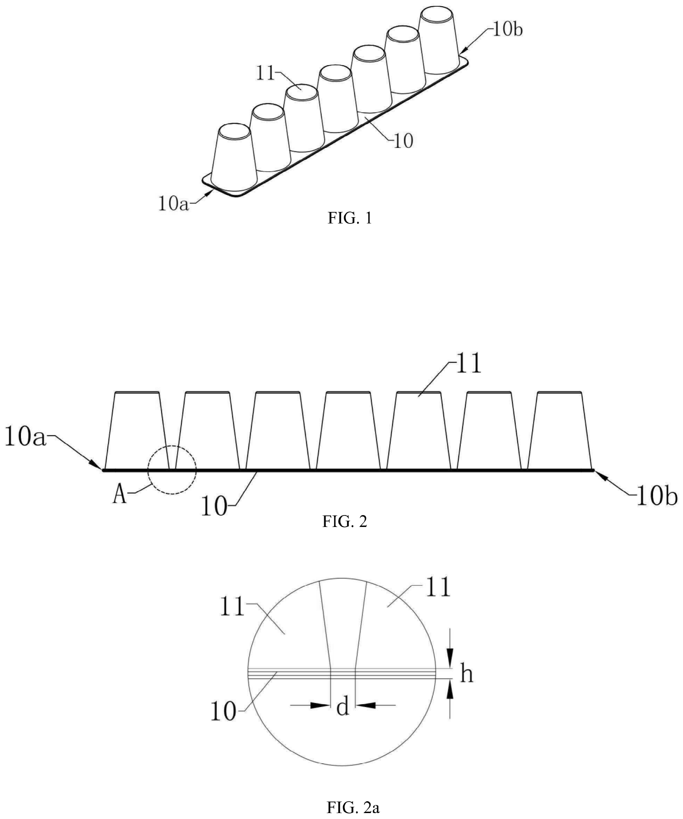

Referring to FIGS. 1-3, Embodiment 1 of the present disclosure provides an elastic unit 1, and the elastic unit 1 comprises: a base 10, and a plurality of elastic modules 11; the base 10 comprises a first end 10a and a second end 10b opposite to the first end 10a in a length direction of the base 10, and the plurality of elastic modules 11 are disposed between the first end 10a and the second end 10b;

The plurality of elastic modules 11 are detachably disposed on the base 10, with their bottoms having openings configured to sleeve over upper surfaces of elastic modules 11 of another elastic unit 1.

In this embodiment, as the elastic modules 11 are detachably disposed on the base 10, the elastic modules 11 can have a relatively orderly arrangement with the bottoms having the openings at a position where they are disposed, thus enabling the elastic modules 11 to be configured to be sleeved over the elastic modules of another elastic unit, so that the plurality of elastic modules 11 are configured to be respectively sleeved over the elastic modules of the same elastic unit, or to be sleeved over the elastic modules of two elastic units at two ends, so as to achieve rapid assembly of the elastic modules and make a whole sleeved structure have more excellent stability. Furthermore, the elastic units 1 can also be stacked in a sleeved manner after being detached one by one, which can effectively facilitate disassembly and transportation of an elastic mattress and reduce a space occupied by storage.

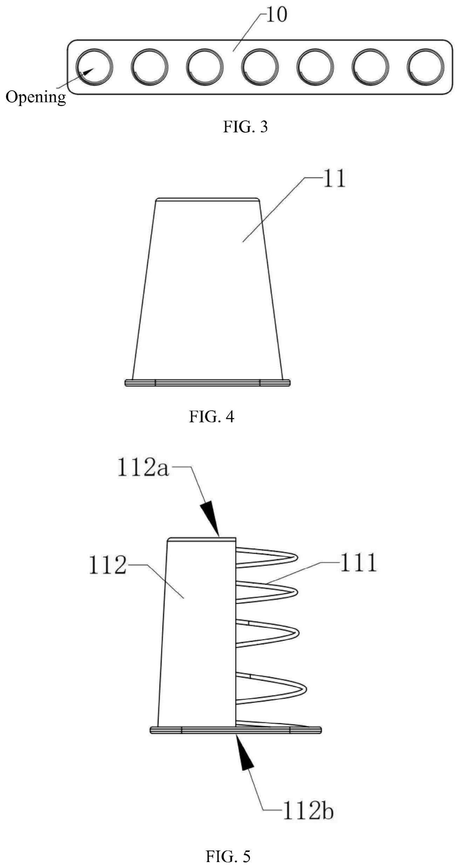

In one or more embodiments of the present disclosure, referring to FIGS. 4 and 5, an elastic module 11 comprises a spring 111 and a flexible sleeve 112, the flexible sleeve 112 comprises a closed end 112a and an open end 112b, the spring 111 passes through the open end 112b of the flexible sleeve 112 to enter into its inner side to enable the flexible sleeve 112 to be wrapped around an outer side of the spring 111, and the open end 112b of the flexible sleeve 112 is configured to be detachably fixed to a bottom end of the spring 111 to enable the spring 111 to have an initial predetermined compression force; a top of another elastic module can extend into the open end 112b, thereby completing sleeving of two elastic modules, as the elastic module 11 has the flexible sleeve 112 disposed on an outer side of the spring 111, the spring 111 in the elastic module 11 is not easily entangled with the spring 111 or other components in an adjacent elastic module 11 no matter whether it is in a state of being assembled into the elastic mattress or in a state of forming a sleeved stacked structure, compared with a single spring, as the elastic module 11 has the base 10, a force-bearing area of the elastic module 11 is larger and more stable, and the elastic mattress is more stable during use; in addition, according to needs, a compression force of the spring 11 in the flexible sleeve 12 is adjusted, thereby predetermining the initial compression force of the spring 111 in the elastic module 11, so that the elastic module 11 has a required rigidity, and the elastic modules 11 with different rigidities can also be disposed at different positions of the elastic mattress as required; the elastic module 11 in the elastic mattress can realize compression and release movements independent of one another in a true sense; and in addition, the flexible sleeve 12 can also play a certain degree of position-limiting effect on the spring 111, preventing the spring 111 from randomly shaking in a horizontal direction of the base, thus effectively improving its stability in the elastic mattress when it is compressed to enable the elastic mattress to have better comfort. Compared with the existing spring mattresses, the elastic mattress of the present disclosure has better comfort.

In one or more embodiments of the present disclosure, referring to FIGS. 2 and 2a at the same time, a thickness h of the base 10 is 5-20 mm; and a distance d between two adjacent elastic modules is 2-10 mm, and elastic modules 11 of different elastic units 10 can be more stably sleeved when elastic units 10 are sleeved using the above-mentioned size parameters.

In one or more embodiments of the present disclosure, referring to FIG. 5, the spring 111 is a tapered spring, thus having better stretching elasticity.

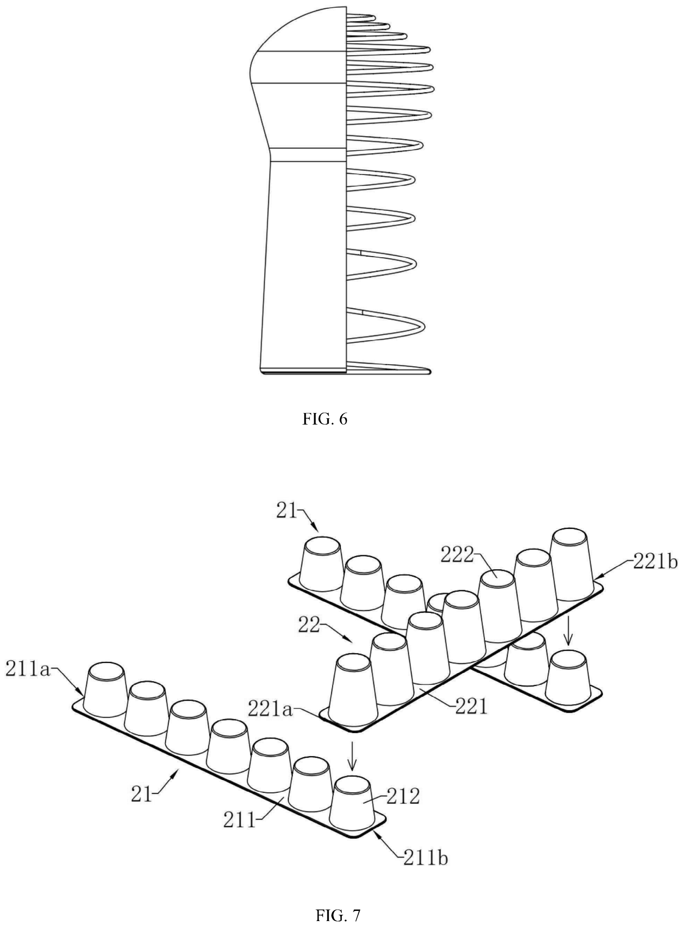

In one or more embodiments of the present disclosure, referring to FIG. 6, upper and lower parts of the spring are as follows, a top has a spherical shape, a bottom connected to the top has a tapered shape, as the bottom of the spring 111 is tapered, the spring 11 configured as this structure has a larger bottom area and is more stable when being placed, the tapered structure has a stronger supporting force, which effectively increases hardness of a waist, the top is spherical, and the spherical shape is relatively easy to compress to have a good elastic touch feeling, which can replace an effect of some of high-elastic sponge layers.

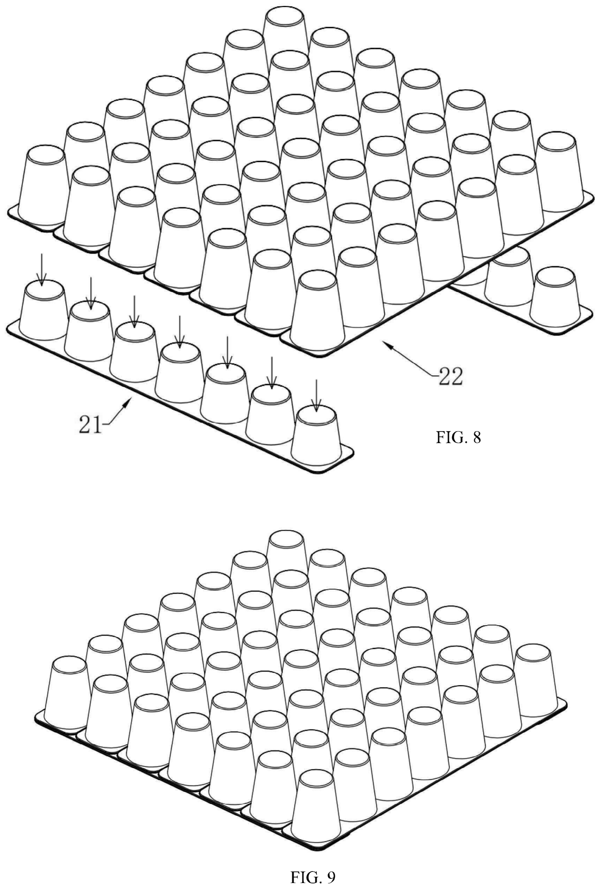

Referring to FIGS. 7-10, an elastic module group 2 of Embodiment 2 of the present disclosure is provided, the elastic module group 2 comprises two installation units 21 and a plurality of elastic units 22.

The two installation units 21 are symmetrically arranged and are parallel to each other, each of the installation units 21 comprises a positioning base 211, the positioning base 211 comprises a first end 211a and a second end 211b opposite to the first end 211a in a length direction of the base, and a plurality of positioning components 212 is disposed at intervals between the first end 211a and the second end 211b.

A number of the elastic units 22 is less than or equal to a number of the positioning components 212 of an installation unit 21, an elastic unit 22 comprises a base 221, the base 221 comprises a first end 221a and a second end 221b opposite to the first end 221a in a length direction of the base 221, and a plurality of elastic modules 222 is disposed between the first end 221a and the second end 221b.

The plurality of elastic modules 222 are detachably disposed on the base 221, with their bottoms having openings configured to sleeve over upper surfaces of the positioning components 212 of the installation units 21.

In one or more embodiments of the present disclosure, the elastic module 222 comprises a spring and a flexible sleeve, the flexible sleeve comprises a closed end and an open end, the spring passes through the open end of the flexible sleeve to enter into its inner side to enable the flexible sleeve to be wrapped around an outer side of the spring, and the open end of the flexible sleeve is configured to be detachably fixed to a bottom end of the spring to enable the spring to have an initial predetermined compression force; and a positioning component 212 of the installation unit 21 can extend into the open end to enable the elastic unit 22 to be sleeved over the installation unit 21.

In this technical solution, in order to better maintain the elastic modules 222 in their proper positions within an elastic mattress, one of the elastic modules 222 of each of the elastic units 22 is sleeved over the positioning component 212 of the installation unit 21 so as to achieve fast assembly of the two elements and a neat arrangement of the two elements, inconsistent elasticity across different regions that are not derived from requirements, caused by the scattered distribution of springs in the elastic mattress, can be avoided; and furthermore, the plurality of elastic units 22 are sleeved one by one over the positioning components 212 of the installation units 21 to form the elastic mattress having a same horizontal height, thereby effectively improving stability of the elastic mattress under pressure, so that the elastic mattress has better comfort.

In particular, on the base 221 of each of the elastic units 22, the elastic modules 222 most adjacent to the first end 221a and the second end 221b of the base 221 are respectively sleeved over opposite positioning components 212 of the installation units 21, so as to enable the plurality of elastic units 22 and the two installation units 21 to be stacked by sleeving.

In this technical solution, the plurality of elastic units 22 are connected to the two installation units 21 by symmetrically arranging the two installation units 21 that are parallel to each other, positions of the plurality of elastic units 22 are fixed to each other, thus, positions of the elastic modules 222 located on the base 221 are fixed, and the elastic mattress has better comfort when being subjected to a pressure at any position, so that the elastic mattress has good stability; and it should to noted that elastic modules 222 at the first end 221a and the second end 221b of an elastic unite will actually appear higher than middle elastic modules 222 due to existence of the two installation units 21, thus, when it is used in the elastic mattress, a user is in a sleeping state, the user will be more likely to sleep in a middle area due to a horizontal height difference, so as to avoid falling from the elastic mattress.

In one or more embodiments of the present disclosure, referring to FIG. 5, the spring is a tapered spring having better stretching elasticity.

In one or more embodiments of the present disclosure, referring to FIG. 6, the spring consists of two parts, a top has a spherical shape, a bottom connected to the top has a tapered shape, as the bottom of the spring 111 is tapered, the spring 11 configured as this structure has a larger bottom area and is more stable when being placed, the tapered structure has a stronger supporting force, which effectively increases hardness of a waist, the top is spherical, and the spherical shape is relatively easy to compress to have a good elastic touch feeling, which can replace an effect of some of high-elastic sponge layers..

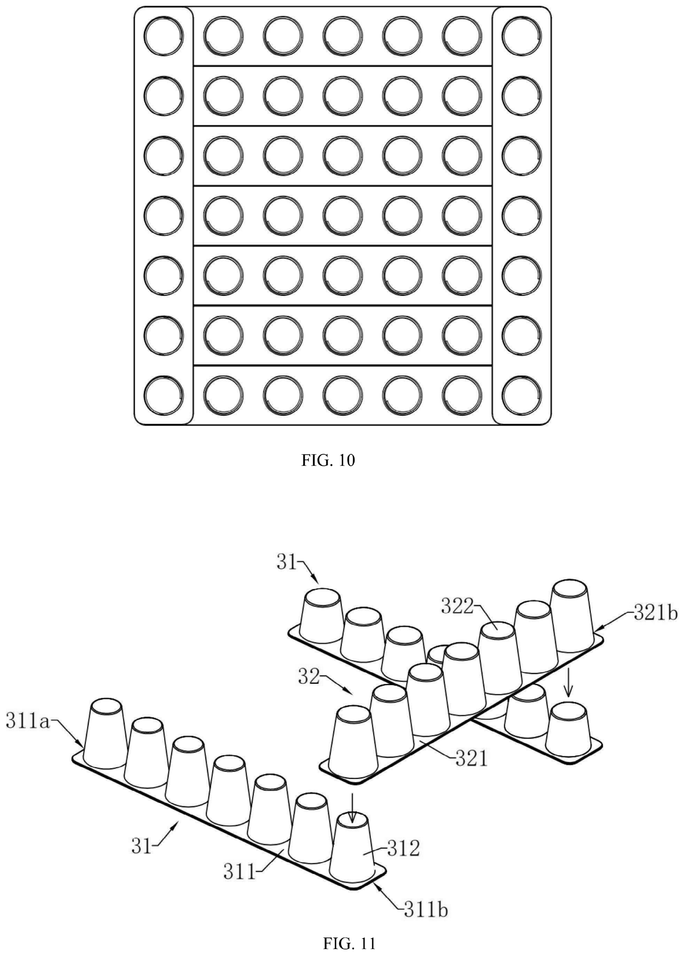

Referring to FIG. 11, an elastic module group 3 of Embodiment 3 of the present disclosure is provided, the elastic module group 3 comprises two first elastic units 31 and a plurality of second elastic units 32.

The two first elastic units 31 are symmetrically arranged and are parallel to each other, and a first elastic units 31 comprises:
A first base 311, the first base comprises a first end 311a and a second end opposite to the first end in a length direction of the first base 311, and a plurality of first elastic modules 312 are disposed between the first end and the second end.

A second elastic unit 32 comprises:
A second base 321, the second base comprises a first end 321a and a second end 321b opposite to the first end 321a in a length direction of the second base 321, and a plurality of second elastic modules 322 are disposed between the first end 321a and the second end 321b.

The plurality of the second elastic modules 322 are detachably disposed on the second base 321, with their bottoms having openings configured to sleeve over upper surfaces of the first elastic modules 312 of the first elastic units 31.

A number of the second elastic units 32 is less than or equal to a number of the first elastic modules 312.

In one or more embodiments of the present disclosure, a first elastic module 312 comprises a first spring and a first flexible sleeve, the first flexible sleeve comprises a first closed end and a first open end, the first spring passes through the first open end of the first flexible sleeve to enter into its inner side to enable the first flexible sleeve to be wrapped around an outer side of the first spring, and the first open end of the first flexible sleeve is configured to be detachably fixed to a bottom end of the first spring to enable the first spring to have an initial predetermined compression force;

In one or more embodiments of the present disclosure, a second elastic module 322 comprises a second spring and a second flexible sleeve, the second flexible sleeve comprises a second closed end and a second open end, the second spring passes through the second open end of the second flexible sleeve to enter into its inner side to enable the second flexible sleeve to be wrapped around an outer side of the second spring, and the second open end of the second flexible sleeve is configured to be detachably fixed to a bottom end of the second spring to enable the second spring to have an initial predetermined compression force; and a top of the first elastic module can extend into the second open end, thereby completing sleeving of the two;

In this technical solution, the first elastic units 31 and the second elastic units 32 can be the same elastic units, so that these elastic units can also be stacked in a sleeved manner after being detached one by one, which can effectively facilitate disassembly and transportation of an elastic mattress and reduce a space occupied by storage, of course, different elastic units can also be used, and a size of the assembled elastic mattress can be controlled by adjusting sizes of various elastic units.

In a more preferred embodiment, elastic modules most adjacent to the first end and the second end of a base of each of the second elastic units are respectively sleeved over opposite first elastic modules of the two first elastic units, so as to enable the plurality of second elastic units to be sleeved over the two first elastic units.

In a more preferred embodiment, the spring is a tapered spring for better stretching elasticity.

An elastic mattress configured for furniture of Embodiment 4 of the present disclosure is provided, and the elastic mattress comprises one or more of the aforementioned elastic units.

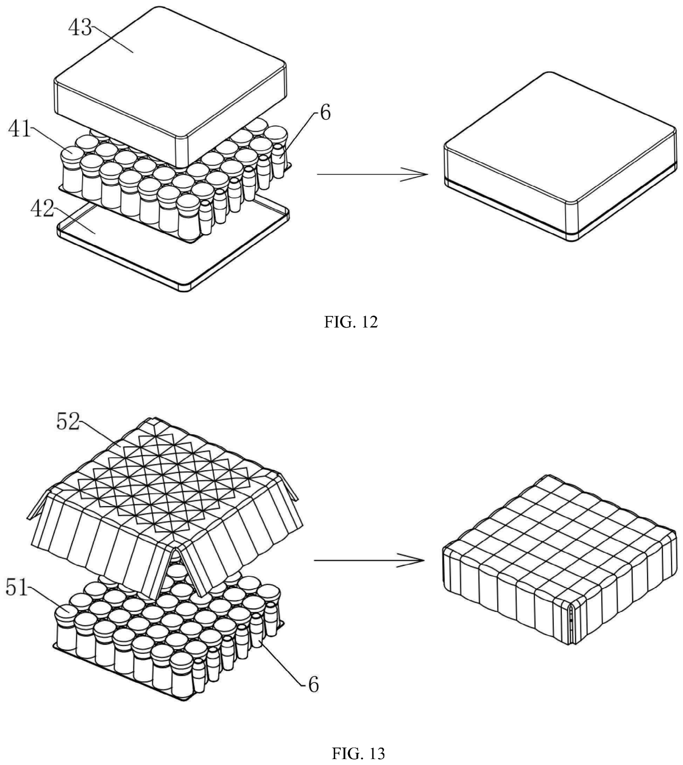

Referring to FIG. 12, an elastic mattress 4 configured for furniture of Embodiment 5 of the present disclosure is provided, the elastic mattress comprises one or more of the aforementioned elastic module groups 41, wherein upper and lower parts of a spring used in an elastic module group 41 are different, a top of the spring is a spherical structure, and a bottom connected to the top is a tapered structure, the elastic module group 41 further comprises small springs 6, the small springs 6 are filled between the main springs 11, preferably, a small spring 6 is filled in four of the main springs, or a middle part of the small spring 6 is connected a main spring using a connector, therefore, the elastic module group has plentiful elastic support, gaps between the springs are relatively low, and the small spring 6 can be replaced by other elastic body, such as an elastic plastic body.

A bottom mattress 42, which is disposed below the elastic module groups 41;

An outer cover 43, which covers an outer surface of the elastic module groups 41;

When in use, the elastic module groups 41 are sleeved, the sleeved elastic module groups 41 are fixedly connected to the bottom mattress 42 by hook-and-loop, buckle structures, etc., and then the outer cover 43 is sleeved over its outer side, so that the elastic mattress 4 can be quickly assembled.

When the elastic mattress is used as a temporary mattress for outdoor camping, student dormitory, an office, or in cases where there are guests at home, the elastic mattress 4 can better reflect advantages of low cost, easy relocation and assembly, and a small space occupied by storage.

Referring to FIG. 13, an elastic mattress 5 configured for furniture of Embodiment 6 of the present disclosure is provided, the elastic mattress configured for furniture, the elastic mattress 5 comprises one or more of the aforementioned elastic module groups 51, wherein the spring used in the elastic module groups 51 comprise two parts, a top is a spherical structure, and a bottom connected to the top is a tapered structure.

An outer cover 52, which covers an outer surface of the elastic module groups 51.

When in use, the elastic module groups 51 are sleeved, the outer cover 52 is sleeved over its outer side, so that the elastic mattress 5 can be quickly assembled.

In addition, those of skill in the art should understand that although there are many problems in the existing techniques, only one or several aspects of each of embodiments or technical solutions of the present disclosure can be improved, and it is not necessary to solve all technical problems listed in the background or in the existing techniques synchronously. It should be understood that a content that is not mentioned in a claim should not be taken as a limitation of the claim by those of skill in the art.

Although terms such as an elastic unit, an elastic module, an elastic module group, a base, a flexible sleeve, a first end, a second end, a closed end, an open end, an outer cover, a bottom mattress, are used extensively in this specification, a possibility of using other terms cannot be excluded. These terms are only used to describe and explain the nature of the present disclosure more conveniently, and interpreting them as any additional limitation is contrary to the spirit of the present disclosure. The terms "first", "second", etc. (if present) in the specification, the claims and the drawings are used to distinguish similar items rather than describing a a specific order or sequential order.

Finally, it should be noted that the aforementioned various embodiments are only used to illustrate the technical solutions of the present disclosure, rather than a limitation; although the present disclosure has been described in detail with reference to the aforementioned embodiments, those of ordinary skill in the art should understand that the technical solutions described in the aforementioned various embodiments can still be modified or equivalent replacements for some or all of the technical features can be implemented; and the nature of the corresponding technical solutions will not deviate from the scope of the technical solutions of the various embodiments of the present disclosure due to these modifications or replacements.

### INDUSTRIAL APPLICABILITY

The present disclosure relates to the field of furniture, and in particular relates to an elastic unit, an elastic module group and an elastic mattress. The elastic unit comprises: a base, the base comprises a first end and a second end opposite to the first end in a length direction of the base and a plurality of elastic modules disposed between the first end and the second end; and the plurality of elastic modules are detachably disposed on the base, with bottoms having openings configured to sleeve over upper surfaces of elastic modules of another elastic unit. The elastic unit can effectively facilitate disassembly and transportation of an elastic mattress, reduce a space occupied by storage, and have industrial applicability.

## Claims

1. An elastic unit, **characterized in that**, the elastic unit comprises:
a base, the base comprises a first end and a second end opposite to the first end in a length direction of the base and a plurality of elastic modules disposed between the first end and the second end;
the plurality of elastic modules are detachably disposed on the base, with bottoms having openings configured to sleeve over upper surfaces of elastic modules of another elastic unit.

2. The elastic unit according to claim 1, **characterized in that**: an elastic module comprises a spring and a flexible sleeve, the flexible sleeve comprises a closed end and an open end, the spring passes through the open end of the flexible sleeve to enter its inner side to enable the flexible sleeve to be wrapped around an outer side of the spring, and the open end of the flexible sleeve is configured to be detachably fixed to a bottom end of the spring to enable the spring to have an initial predetermined compression force; and a top of another elastic module is configured to extend into the open end, thereby completing sleeving of two elastic modules.

3. The elastic unit according to claim 1, **characterized in that**: a thickness of the base is 5-20 mm; and a distance between two adjacent elastic modules is 2-10 mm.

4. The elastic unit according to claim 1, **characterized in that**, the spring is a tapered spring.

5. The elastic unit according to claim 1, **characterized in that**: the spring consists of two parts, a top is a spherical structure, and a bottom connected to the top is tapered structure.

6. An elastic module group, **characterized in that**, the elastic module group comprises:
two installation units, the two installation units are aligned with each other and are parallel, each of the installation units comprising a positioning base, the positioning base comprises a first end and a second end opposite to the first end in a length direction of the base, and a plurality of positioning components are disposed at intervals between the first end and the second end; and
a plurality of elastic units, a number of the elastic units is less than or equal to a number of the positioning components of an installation unit, which comprises a base, the base comprises a first end and a second end opposite to the first end in a length direction of the base, and a plurality of elastic modules are disposed between the first end and the second end; and
the plurality of elastic modules are detachably disposed on the base, with bottoms having openings configured to sleeve over upper surfaces of the positioning components of the installation units.

7. An elastic module group, **characterized in that**, the elastic module group comprises:
two first elastic units, the two first elastic units are aligned with each other and are parallel, a first elastic units comprises:
a first base, the first base comprises a first end and a second end opposite to the first end in a length direction of the first base, and a plurality of first elastic modules are disposed between the first end and the second end;
a plurality of second elastic units, a second elastic unit comprises:
a second base, the second base comprises a first end and a second end opposite to the first end in a length direction of the second base, and a plurality of second elastic modules are disposed between the first end and the second end;
the plurality of the second elastic modules are detachably connected to the second base, with bottoms having openings configured to sleeve over upper surfaces of the first elastic modules of the first elastic units; and
a number of the second elastic units is less than or equal to a number of the first elastic modules.

8. The elastic module group according to claim 7, **characterized in that**:
elastic modules most adjacent to the first end and the second end of the second base of each of the second elastic units are respectively sleeved over apposite ones of the first elastic modules of the two first elastic units, so as to enable the plurality of second elastic units and the two first elastic units to be stacked by sleeving.

9. An elastic mattress configured for furniture, **characterized in that**, the elastic mattress comprises one or more of the elastic units according to any one of claims 1-6.

10. An elastic mattress configured for furniture, **characterized in that**, the elastic mattress comprises:
one or more of the elastic module groups according to any one of claims 7-9,
a bottom mattress, the bottom mattress is disposed below the elastic module groups, and
an outer cover, the outer cover covers an outer surface of the elastic module groups.
